# EUROPEAN PATENT APPLICATION

(11) **EP 2 200 334 A1**
(43) Date of publication of application: **23.06.2010**
(21) Application number: 08305966.7
(22) Date of filing: 18.12.2008
(51) Int. Cl.: H04N 17/04, G06Q 30/00

(54) **Display device with feedback elements and method for monitoring**

(71) Applicant: Thomson Licensing, 92443 Issy-les-Moulineaux Cedex (FR)
(72) Inventor: Weitbruch, Sébastien, 78078, KAPPEL (DE); ZWING, Rainer, 78052, Pfaffenweiler (DE); Thebault, Cedric, 78050, Villingen-Schwenningen (DE)
(74) Representative: Kurth, Dieter

(57) **Abstract**

A display system including a plurality of display units shall be supervised as to its proper functioning as well as the right content to be displayed. Therefore, there is provided a display device and a corresponding method for monitoring the presentation of a video signal on a display screen having a plurality of screen drivers (14,15). A mark signal is added to the video signal and a mark (13) is displayed within a picture on the basis of the video signal including the mark signal. The mark is sensed by a specific sensor and a corresponding sensing signal is provided. In order to supervise the functioning of each screendriver (14,15) a specific mark signal is added for each screendriver into the video signal. Each of the plurality of marks is sensed and specific sensing signals are provided for each of the plurality of marks.

## Description

The present invention relates to a display device for providing a display in accordance with a video signal including marking means for adding a mark signal into said video signal and a display screen for displaying a mark within a picture on the basis of said video signal including said mark signal, wherein said display screen includes a plurality of screen drivers. Furthermore, the display device includes sensor means for sensing said mark and for providing a corresponding sensing signal. Moreover, the present invention relates to a method for monitoring the presentation of a video signal on a display screen.

### Background

In a retail environment (big shop) or in public environment, flat displays are commonly used to provide several types of information: advertisement, global information (opening hours...), crisis information like during a hurricane and so on. The concept described in this document will target several of such applications and is quite general. However, in order to simplify the exposition, the description and examples here are limited to retail environment.

In such a retail environment, it is more and more common to use several displays for advertising, but the information can be distributed and driven from a server located far away from the display. However, it is mandatory to be able to detect if each display is operational, if the picture is displayed correctly and which signal is displayed. Today's solutions are mostly based on a visual check of the display or using camera and checking specific watermarks inside the signal. Those solutions require more efforts in terms of manpower or electronic like cameras. The same is true for similar applications like public displays (airport, train stations...).

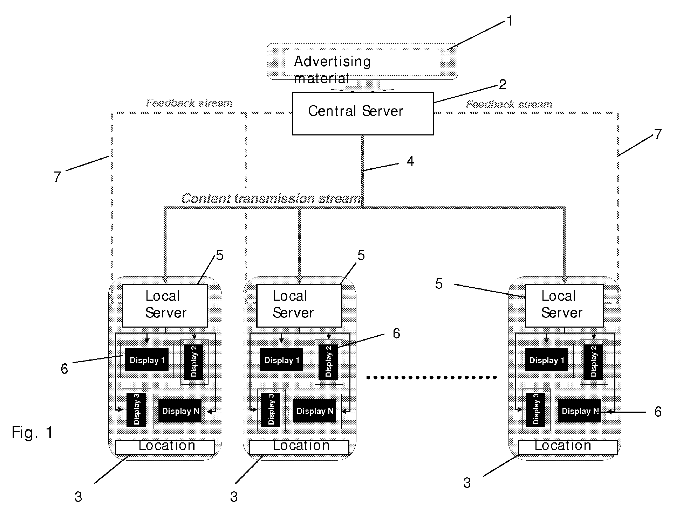

In all situations, the provision of information is done in a similar way as described in connection with Fig. 1. This diagram shows a global approach for a retail advertising network. The advertising material is generated somewhere and is transmitted via a central server 2 directly to shops 3 by a content transmission stream 4. Note that the shops 3 can belong to different networks while sharing the same advertising network.

In the present example each shop 3 has a local server 5 connected to a plurality of displays 6. The local server 5 redistributes the information obtained from central server 2 within the local display network. In addition, each local server 5 may generate information which has to be send back via a feedback stream to the central server 2.

The feedback stream 7 is represented in dotted lines since in practice it is not really done automatically yet. For the moment, there exists some manual or visual control of the display in each shop that can be conducted by the shop itself or by the company responsible for the advertising network but this can not be done all the time and does not cover all required information.

The United States Patent US 6,362,860 B1 discloses a display control method and a corresponding apparatus. In setting a plurality of types of image quality in a single screen, an arrangement is made to facilitate the setting of a range in which each image quality is set. Up on generating a video signal to be displayed on a predetermined display unit, the process is performed for inserting predetermined mark signals in the video signal at positions corresponding to at least two corners on the diagonal in a predetermined range of an image to be displayed. At the same time, the positions where the mark signals are inserted are moved in accordance with a predetermined operation input thereby to move the range set in the image to be displayed.

Furthermore, the document WO 2006/123089 A2 describes a video display system. Video display of a sequence of advertising is provided by display units in shopping centers in accordance with video signals supplied via a wide-area network. Each display unit includes a sub-unit for adding a mark signal into the network-supplied video signals, and a photo-sensor is used to verify display of the mark, and thus of the advertising, on the screen of the display unit. If display of the mark is interrupted, a signal identifying the respective display unit and its center is transmitted via the network to trigger remedial action and/or locking. The added mark signal is synchronized to the input video signal to appear in a fixed screen/location, and enhanced verification of integrity of the video display includes checking whether there is correspondence between encoding detected in the displayed mark and encoding of the mark signal added to the video signals.

### Invention

It is the object of the present invention to provide a display system which can be supervised as to its proper functioning precisely and in a cost effective way.

According to the present invention this object is solved by a display device for providing a display in accordance with a video signal including marking means for adding a mark signal into said video signal, a display screen for displaying a mark within a picture on the basis of said video signal including said mark signal, said display screen including a plurality of screen drivers, sensor means for sensing said mark and for providing a corresponding sensing signal, wherein said marking means is designed for adding a specific mark signal for each screen driver into said video signal and said sensor means has a plurality of sensor units each provided for sensing one of a plurality of marks representing one of the plurality of specific mark signals, said sensing means providing a specific sensing signal for each of said plurality of marks.

Furthermore, there is provided a method for monitoring the presentation of a video signal on a display screen having a plurality of screen drivers, including the steps of adding a mark signal into said video signal, displaying a mark within a picture on the basis of said video signal including said mark signal, sensing said mark and providing a corresponding sensing signal. The method further includes the steps of adding a specific mark signal for each screen driver into said video signal and sensing each of a plurality of marks representing one of the plurality of specific mark signals as well as providing a specific sensing signal for each of said plurality of marks.

The advantage of the inventive solution is that each single driver of a display unit can be monitored precisely. Specifically, each column driver and each line driver of a display unit can be monitored by a corresponding mark.

Preferebally the plurality of marks include a white mark for each driver in order to control the stability of the display. Additionally, the quality of controlling may be improved by using thin marks.

The plurality of marks may also include a black area for each driver in order to control the noise level of the display. Very low noise levels can be detected on black background more reliably.

According to a further development two types of sensors are provided, a first type having a first sensitivity to luminance and a second type having a much higher second sensitivity to luminance. With such different sensitivities very small diviations from pregiven marks can be detected.

Moreover, at least one of the plurality of sensor units may be provided with a specifically shaped mask. Such a mask enables to exactly detect special diviations of a mark.

The sensor means of the display device may be integrated on or into the active matrix of the display screen. The advantage of such integration is that the display screen and the sensor means can be produced within one fabrication process.

According to another embodiment there is provided a display device for providing a display in accordance with a video signal including marking means for adding a mark signal into said video signal, a display screen for displaying a mark within a picture on the basis of said video signal including said mark signal, sensor means for sensing said mark and for providing a corresponding sensing signal, wherein said marking means is designed to add a mark signal specific to said video signal.

Similarily there is provided a method for monitoring the presentation of a video signal on a display screen, including the steps of adding a mark signal into said video signal, displaying a mark within a picture on the basis of said video signal including said mark signal, sensing said mark and providing a corresponding sensing signal,
wherein said mark signal is a specific mark signal depending on the semantic content of said video signal.

Preferebally the mark is spatially and/or temporally modulated thereby representing coding information. Modulated marks may indicate specific contents of the video signal.

Finally, for solving the above-mentioned problem, there is provided a display system including server means for providing a video signal, at least one of the above described display devices provided with the video signal and controlling means for controlling the server means and/or the at least one display device depending on the sensing signal of the at least one display device. With such a system it is possible to establish a display controlling based on the feedback of single display devices.

The controlling means may be capable of analyzing an image of the display device in a period of time pregiven by an anti-burning mechanism. This is necessary, when an anti-burning mechanism affects the temporal or spatial position of the mark.

### Drawings

The present invention is illustrated along with the attached drawings showing in:
- Fig. 1: a block diagram of the information transport within a display system;
- Fig. 2: a view of the display area;
- Fig. 3: examples of white control marks;
- Fig. 4: an inventive embodiment of a display device with control marks for single scan display;
- Fig. 5: a display device with control marks for dual scan display;
- Fig. 6: a display device with a complete feedback system;
- Fig. 7: a schematical diagram showing an increased accuracy with shadow masking;
- Fig. 8: an example for coding marks for different contents; and
- Fig. 9: a feedback decision block.

### Exemplary embodiments

### Need of a feedback stream

The present invention is based on the necessity of a reliable feedback stream for controlling display units in an advertising network, for instance. It is the purpose of the present document to propose a new and more precise solution for that specific feedback stream.

An advertising network including flat panel displays may be set up by an independent company inside a shop. This company is also responsible for displaying the right information. Indeed, usually part of the material and network running costs are covered by the advertising fees coming from the brands. On the other side, it has to be ensured that advertising spots really show brands at the right time and place. Therefore, several key information is mandatory at the level of the networking control level (e.g. central server) like:
- Is there any image on the display? A black display is bad both for the shop and for the advertiser who pays for running spot time.
- Is the image stable? Pictures of a bad quality are not good for selling products, above all when the product is a display or product in relation with display or image quality. Such problem can occur when synchronization errors appear (bad connection, signal level too low, defect receiving or transmitting electronic...)
- Is there too much noise in the image? Bad quality pictures are not good for selling products above all when the product is a display or link in relation with display or image quality. Such problem can occur when the image decoding is not properly running or when too many losses are occurring in the transmission chain.
- Is there any driver that is defect? Flat panel displays are using column and line drivers for proper image addressing and lighting thereof. Simple electronic defects, overheating or other issues can be the cause of driver failure, thus introducing vertical or horizontal black areas on the screen. As for the two preceding topics, images of a bad quality can not be afforded in such an environment where each display minute has a given price.
- Is the correct image displayed on the screen? The proprietors of brands are paying fees for having their content on the right place and the right time and therefore they need to be sure that nothing else is displayed on the screen.

In case of trouble it is important to react rapidly to solve the problem thus avoiding any loss of money for one of the involved parts.

There are several types of solution for a feedback system but no one is really optimized as given below:
- Some workers in the shop can check regularly the well functioning of the displays to inform the responsible company. This solution is not functioning very well since the shop itself is not always involved in the advertising chain. Moreover, very small shops do not have enough resources or do not have the appropriated and schooled staff to perform such a control.
- Some members of the responsible company for the advertising network can visit shops regularly to control them. However, as soon as the amount of shops and the surface where the network has been put in place is growing, this would be too expensive and time consuming.
- Some camera can be set in front of a screen and can check the type of material shown on this screen. To do that, some video' watermarks' can be inserted by the central server and can be checked at the camera level. Any lack of appropriate 'watermark' can be given as feedback to the central server. However, this system is costly and can simply give an information whether the watermark can be detected or not. This would not give any possibility to check what exactly is wrong in the system.

The same type of feedback is needed also for public display. Indeed, in an airport, important information like airplane delay or security instructions must be available to each traveler and cannot be hidden by non working flat panel displays or networks. The same is true for more critical information like hurricane, fire or flooding information. In this area, it must be mentioned that even advertising displays have been used to display such information and have been very helpful to save lifes.

### Information hidden in the video sent by the central server

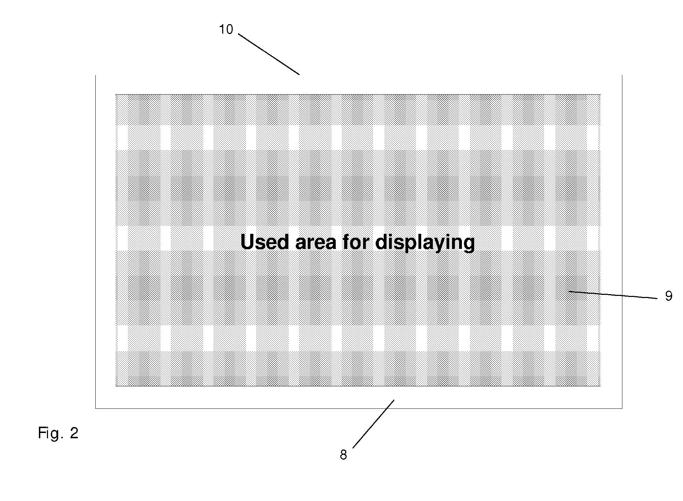

The main idea of the present invention is based on a insertion in the displayed sequence of control marks around the image. The control marks may derive from the content signal or may be added by the central server 2 (compare Fig. 1) or by specific marking means. For the control marks we will define a control area 8 and an display area 9 inside the normal active area 10 of the display. This is illustrated in Fig. 2.

In the control area 8 control marks are defined either as white forms on a black background or as black forms. The white forms can be used for controlling the stability of the display whereas the black forms can be used for controlling the noise level of it.
Optionally, both areas will be used for controlling the well functioning of the drivers so that at least one black area and one white control mark is provided per driver. Last but not least, it will be possible by time switching of the white areas to send some coded information in order to precisely identify the information displayed on the screen.

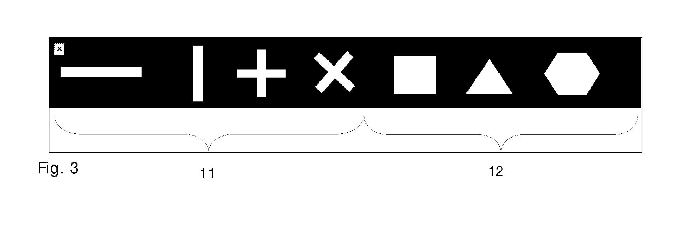

Fig. 3 shows some examples of white control marks. The thin marks 11 will be preferably used since they will give much more precise information regarding stability of the displayed image. The rough control marks 12 may be used for other purposes.

In order to hide the displayed marks, the area 8 of the screen used for controlling will be covered by a black material as it was the case in the old CRT television.

### Sensor analyzing control information

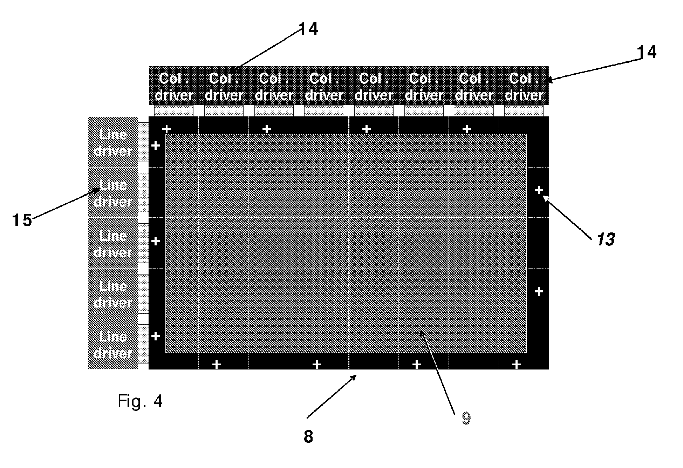

The system of the present example will need to define at least one control mark per driver area (less can be used for cost reason but the result will be less performing) as illustrated in Fig. 4

A case of a display with single scanning and possible position for control marks 13 is illustrated. As already mentioned, the marks 13 are video information inserted inside the source signal at the central server level. In this concept, white control marks 13 are inserted at the top and bottom part of the screen with at least one mark 13 per column driver 14. Similarily control marks 13 are inserted at the left and right parts of the screen with at least one mark 13 per line driver 15. By this means, it is possible by controlling if the mark 13 is lighting to know exactly if the driver 14,15 is running. Advantageously, this concept is fully independent from the flat panel manufacturer and can be added by any set integrator or by the company responsible for the installation of the display network.

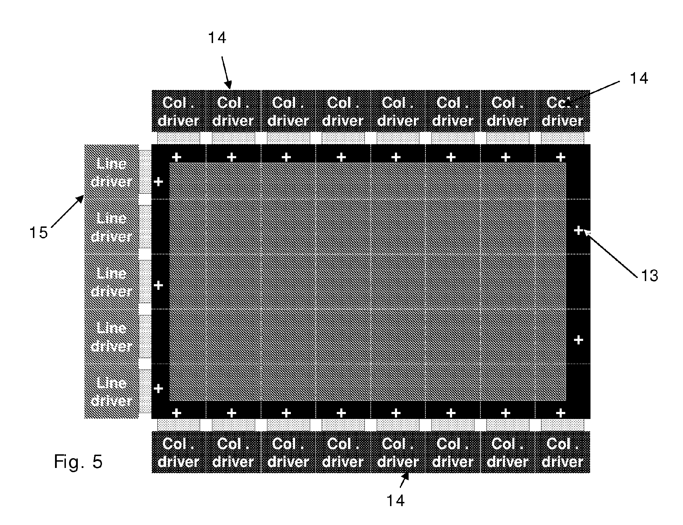

Today, there are still some flat panel displays, mainly PDPs, that are still using dual scanning. In that case, the top and bottom half part of the screen are scanned in parallel and twice more column drivers 15 are used. This means that more control marks 13 will be needed as illustrated in Fig. 5

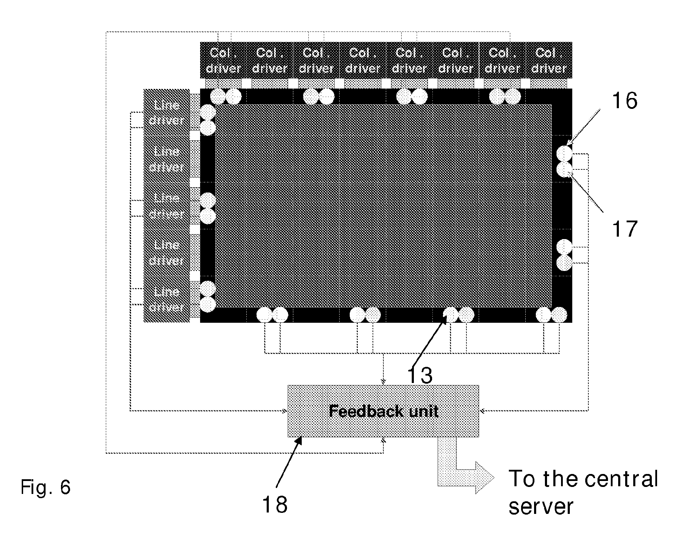

Now, in order to control the right functioning of the display, simple light sensors will be mounted onto the front glass and hidden later by a black cover sheet. This concept is illustrated in Fig. 6 for a single scan panel.

Fig. 6 shows an example of display with a complete feedback system. For each mark and related black area, two types of sensor are used:
- For the white marks 13, sensors 16 sensitive to high luminance and capable to detect if the mark 13 is present of not.
- For the black areas or marks, sensors 17 very sensitive to low luminance and capable to detect the presence of unwanted light. This could be necessary in case of noise.

Each sensor 16,17 is connected to a feedback unit 18 which provides feedback signals to the central server.

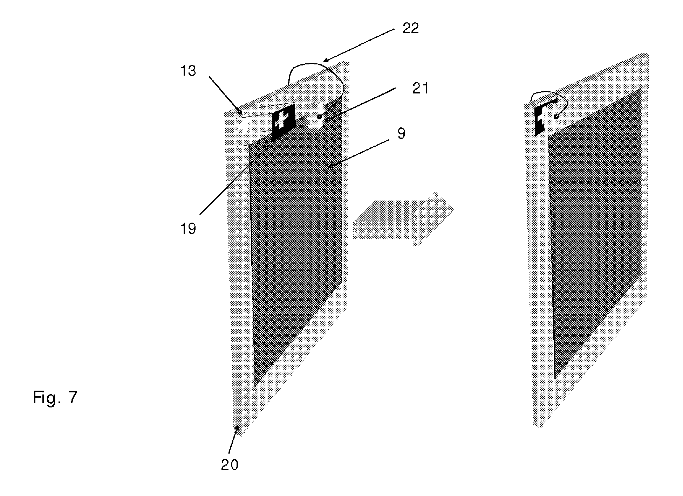

Regarding the white marks 13, additional filters can be adjusted between the display and the sensor in order to check exactly the position of the mark 13. This will enable to detect problems like vertical or horizontal jitter in the displayed signal up to a very precise level. This concept is illustrated on Fig. 7.

A shadow mask 19 is cut precisely at the pixel size level and adjusted to the screen i. e. the front glass panel 20 thus allowing a corresponding light sensor 21 to detect precisely if the light is coming correctly from the screen specifically the area 8 for control marks. In this case it is even preferable to use separately a horizontal and a vertical mark instead of the cross mark illustrated.
Each sensor 21 located in front of such a mask 19 will be then able to detect if the light is coming through the opening and how stable this will occur. If it is only randomly or only occurring from time to time, this will mean that the displayed image is not stable at all. A feedback signal from the sensor 21 is transmitted via a feedback connection 22 to feedback unit 18 (not shown in Fig. 7)
Optionally the sensors are integrated by the technology itself like in OLED displays directly on the active matrix.

Today's flat panel displays are usually suffering from burn-in, burning or ageing. Even LCD displays are faced with such issues. This means that if the same picture is displayed a long time on the screen, the more luminous elements of this picture will introduce locally a stronger decrease of the pixel luminance thus making a kind of negative shadow of this image on all other images shown later on. This is mainly critical for logos or text.
For instance, a certain brand image is shown a long time on a display and is replaced later on by a competitor using the same screen in the shop. It would not be very nice for the proprietor of a new brand to see the name of the previous competitor as a kind of shadow on his spot.

In order to limit this problem, panel manufacturers are implementing several counter methods. The most popular for public and advertising display is a kind of image translation. In this case, the image is translated periodically and very slowly so that the critical information is never at the same location. This makes the border of a burned text quite unsharp and thus less visible.
In the case of the proposed concept if using control marks, the regular translation of an image could become critical since the control marks will be moved as well.
In order to avoid that, the feedback control system should be capable (depending on settings) to analyze the image on a given period of time. Indeed, any anti-burning system will move in a kind of elliptical movement the mark back to its original position. This means that the sensor will periodically see the control mark. Thus, it is easy to make a difference between a synchronization problem where the mark will appear and disappear totally randomly, and the expected case with a periodical and controlled appearing of the signal.

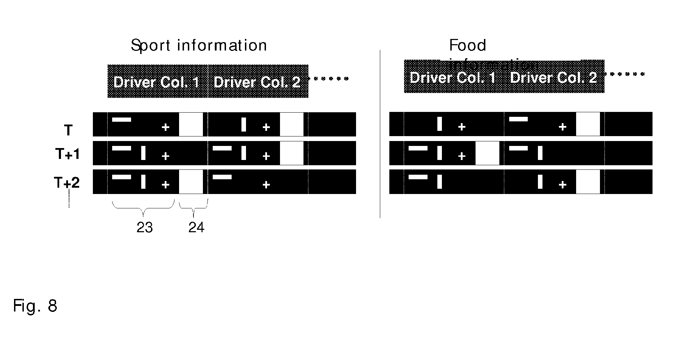

As already mentioned, there is not only a need to know if the display is running but one also needs to know if the display is showing the right information.
This means, for instance, that the display located in the food department should not show sport advertisement in place of food or related material.
In order to control this, it is possible to use the marks for adding information to the several streams sent by the central server. For instance, information can be coded like in a bar code either by using spatial modulation (needs more sensors) or by using temporal modulation. In other words, in the spatial domain and for a certain type of sequences, some white marks will be white and others will be black and the same is true for black areas. On the other side, in the temporal domain, some white marks will be switched ON and OFF differently from each other. The same is true for black areas. Moreover, a combination of both spatial and temporal modulation can be used. Fig. 8 shows an example thereof. The left part of Fig. 8 illustrates marks coding sport information and the right part of Fig. 8 depicts marks coding food information. Each row of marks represents a point of time (T,T+1,T+2,...) of a sequence of marks displayed in the area of control marks. In the present example each driver is monitored with four marks (more or less marks are possible). The first three marks are thin marks 23 to be detected by "white" sensors 16, and the fourth mark is a rough mark 24 to be detected by a "black sensor" 17. At least one mark changes for the type of information, the individual driver and the time frame.

With such coding, it is simple to control that the display located at the food department will display food relevant information and from the right networking supplier.

### Feedback decision system

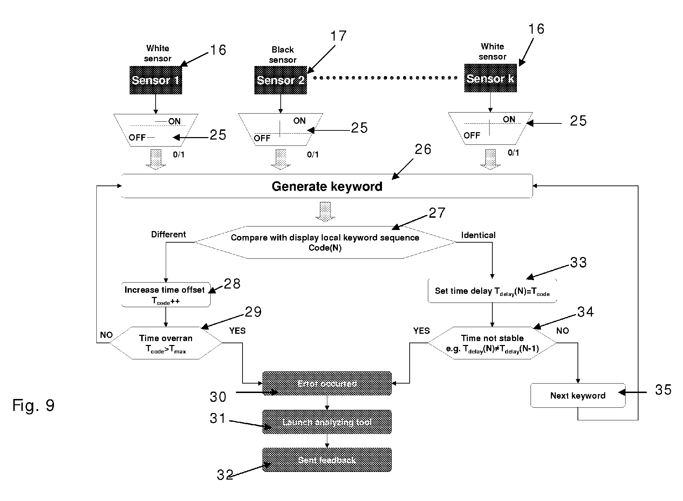

Fig. 9 shows the overall concept of a feedback information system. The outputs from the different sensors 16, 17 will be delivered to a threshold binary function (blocks 25). The main difference between the white and black sensor 16, 17 is their sensibility (e.g the level of the threshold) as depicted on the Fig. 9. After a threshold block 25, each sensor signal will be associated with a binary value 0 or 1 that will build a keyword at a given time (block 26). This keyword will be compared (block 27) with the keyword sequence of the video signal (the next keyword following the previously recognized one). If the keyword is not recognized (left side of block 27) a timer is increased (block 27). This timer will be used for avoiding any influence of anti-burning system and its duration should be set accordingly. If after a maximum amount of time (block 29), the keyword has not been recognized, an error will be detected (block 30).

The system can analyze the error events (block 31) and e. g. wait after a certain amount of error events before sending any feedback information to the central server for stability reason (block 32).

On the other hand, if the keyword has been recognized after a certain time T_{code} (loop of blocks 26 to 29), this time T_{delay} (N)=T_{code} (block 33) will be analyzed and compared with previous waiting time T_{delay} (N-1) to determine periodicity and stability of the decision (block 34). Here a minimum threshold is needed in the comparison to avoid the impact of hardware delays that could vary.

If the stability is OK (right side of the block 34), the next keyword to be recognized is selected (block 35).
If not (left side of block 34) again the error block 30 will be entered.

Block 31 will first analyze how often an error is appearing and will try to determine which type of error:
- Instability in the decision period leads to instability of the picture.
- Black areas are not black thus too much noise or contrast defect occurs.
- General error in one sub-word sequence (all 1 or all 0) means that a driver probably is defect.
- It is also possible to compare a detected keyword with a second set of keywords to detect if the wrong signal has been delivered to the display (e.g. food material on sport display).
- No keyword recognized indicates that incorrect material is displayed!
Several other information can be extracted as needed by the network administrator.

Generally any type of display or display system used in a predetermined environment can benefit from the present invention.

## Claims

1. Display device for providing a display in accordance with a video signal including
- marking means for adding a mark signal into said video signal,
- a display screen (10) for displaying a mark (13) within a picture on the basis of said video signal including said mark signal, said display screen including a plurality of screen drivers (14, 15),
- sensor means (16,17) for sensing said mark (14,15) and for providing a corresponding sensing signal,
**characterized in that**
- said marking means is designed for adding a specific mark signal for each screen driver (14,15) into said video signal and
- said sensor means (16,17) has a plurality of sensor units each provided for sensing one of a plurality of marks (13) representing one of the plurality of specific mark signals, said sensing means providing a specific sensing signal for each of said plurality of marks.

2. Display device according to claim 1, wherein said plurality of marks (13) include at least (it can be more) a white mark for each driver (14,15) in order to control stability of the display.

3. Display device according to claim 1 or 2, wherein said plurality of marks (13) include at least (it can be more) a black area for each driver (14,15) in order to control the noise level of the display.

4. Display device according to one of the preceding claims, wherein two types of sensors are provided, a first type having a first sensitivity to luminance and a second type having a much higher second sensitivity to luminance.

5. Display device according to one of the preceding claims, wherein at least one of the plurality of sensor units (21) is provided with a specifically shaped mask (19).

6. Display device according to one of the preceding claims, wherein a sensor means (16,17) is integrated into the display screen (10).

7. Method for monitoring the presentation of a video signal on a display screen (10) having a plurality of screen drivers (14,15), including the steps of
- adding a mark signal into said video signal,
- displaying a mark (13) within a picture on the basis of said video signal including said mark signal,
- sensing said mark (13) and providing a corresponding sensing signal,
**characterized in that**
- adding a specific mark signal for each screen driver (14,15) into said video signal and
- sensing each of a plurality of marks (13) representing one of the plurality of specific mark signals and
- providing a specific sensing signal for each of said plurality of marks.

8. Display device for providing a display in accordance with a video signal including
- marking means for adding a mark signal into said video signal,
- a display screen (10) for displaying a mark (13) within a picture on the basis of said video signal including said mark signal,
- sensor means (16,17) for sensing said mark and for providing a corresponding sensing signal,
**characterized in that**
- said marking means is designed to add a mark signal specific to said video signal.

9. Display device according to claim 8, wherein said mark (13) is specially and/or temporally modulated, thereby representing coding information.

10. Method for monitoring the presentation of a video signal on a display screen (10), including the steps of
- adding a mark signal into said video signal,
- displaying a mark (13) within a picture on the basis of said video signal including said mark signal,
- sensing said mark (13) and providing a corresponding sensing signal,
**characterized in that**
- said mark signal is a mark signal specific to said video signal.

11. Display system including
- server means (2) for providing a video signal,
- at least one display device (6) according to one of claims 1 to 3 provided with said video signal and
- controlling means for controlling said server means (2) and/or said at least one display device (6) depending on said sensing signal of said at least one display device (6).
